(19) **Europäisches Patentamt**

**European Patent Office**

**Office européen des brevets**

(11) **EP 1 254 504 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(51) Int Cl.$^7$: **H02M 3/335**

(21) Anmeldenummer: **01900142.9**

(22) Anmeldetag: **09.01.2001**

(86) Internationale Anmeldenummer:
**PCT/EP01/00168**

(87) Internationale Veröffentlichungsnummer:
**WO 01/054259 (26.07.2001 Gazette 2001/30)**

(54) **VERFAHREN ZUM ANLAUFEN EINES SCHALTNETZTEILES UND SCHALTNETZTEIL MIT EINER ANLAUFSCHALTUNG**

METHOD FOR STARTING A SWITCHING POWER SUPPLY AND A SWITCHING POWER SUPPLY COMPRISING A STARTING CIRCUIT

PROCEDE DE MISE EN MARCHE D'UNE ALIMENTATION A DECOUPAGE ET ALIMENTATION A DECOUPAGE COMPORTANT UN CIRCUIT DE MISE EN MARCHE

(84) Benannte Vertragsstaaten:
**DE FR GB IT**

(30) Priorität: **20.01.2000 DE 10002325**

(43) Veröffentlichungstag der Anmeldung:
**06.11.2002 Patentblatt 2002/45**

(73) Patentinhaber: **Infineon Technologies AG**
**81669 München (DE)**

(72) Erfinder:
• **FELDTKELLER, Martin**
**81543 Muenchen (DE)**
• **PRELLER, Peter**
**81243 Muenchen (DE)**

(74) Vertreter: **Bickel, Michael et al**
**Westphal & Partner**
**Mozartstrasse 8**
**80336 München (DE)**

(56) Entgegenhaltungen:
**EP-A- 0 494 327          DE-A- 4 111 277**
**DE-A- 19 805 927**

## Beschreibung

Die Erfindung betrifft ein Verfahren zum Anlaufen eines Schaltnetzteiles sowie ein Schaltnetzteil mit einer Anlaufschaltung, bei dem die Wechselspannungseingänge eines Brückengleichrichters, an denen eine Wechselspannung liegt, über einen Y-Kondensator oder eine Reihenschaltung aus zwei Y-Kondensatoren miteinander verbunden sind, bei dem an die Gleichspannungsausgänge des Brückengleichrichters eine Parallelschaltung aus einer ersten Kapazität und aus einer Reihenschaltung, bestehend aus der Primärwicklung eines ersten Übertragers und einem ersten steuerbaren Schalter, angeschlossen ist, dessen Steuereingang mit dem Ausgang eines Impulsgebers verbunden ist, und bei dem parallel zur Sekundärwicklung des Übertragers eine Reihenschaltung aus einer ersten Diode und einer zweiten Kapazität liegt.

Es ist bekannt, zum Anlaufen eines Schaltnetzteiles eine Batterie oder einen Akku vorzusehen.

Dieses bekannte Verfahren zum Anlaufen eines Schaltnetzteiles ist jedoch mit dem Nachteil behaftet, dass die Herstellungskosten verhältnismäßig hoch liegen und die Haltbarkeit der Batterie oder des Akkus begrenzt ist.

Es ist daher Aufgabe der Erfindung, ein Verfahren zum Anlaufen eines Schaltnetzteiles sowie ein Schaltnetzteil mit einer Anlaufschaltung so zu gestalten, dass ein nur geringer technischer Aufwand erforderlich ist, die Herstellungskosten niedrig liegen und die Haltbarkeit über lange Zeit gewährleistet ist.

Verfahrensmäßig wird diese Aufgabe mit den im Anspruch 1 angegebenen Merkmalen dadurch gelöst, dass die von den Y-Kondensatoren gesammelte Energie auf die zweite Kapazität übertragen wird und daß der Impulsgeber abhängig von einer an der zweiten Kapazität abgreifbaren Spannung Ansteuerimpulse für den steuerbaren Schalter erzeugt.

Vorzugsweise erzeugt der Impulsgeber erst dann Ansteuerimpulse für den steuerbaren Schalter, wenn die Spannung an dem zweiten Kondensator einen ersten Schwellenwert überschritten hat. Gemäß einer Ausführungsform der Erfindung ist dabei vorgesehen, die an der zweiten Kapazität abgreifbare Spannung als Versorgungsspannung erst dann an einen Versorgungsspannungseingang des Impulsgebers zu legen, wenn sie einen ersten vorgebbaren Mindestwert erreicht hat, um dadurch den Impulsgeber einzuschalten.

Vorzugsweise erzeugt der Impulsgeber keine Ansteuerimpulse, wenn die Spannung an dem zweiten Kondensator unter einen zweiten Schwellenwert abgesunken ist, wobei der zweite Schwellenwert kleiner als der erste Schwellenwert ist. Wird der Impulsgeber eingeschaltet, so nimmt er Strom von dem zweiten Kondensator auf, was zu einem Absinken der über dem zweiten Kondensator anliegenden Spannung führt. Da der erste Schwellenwert, bei dessen Erreichen Ansteuerimpulse erzeugt werden, höher liegt als der zweiten Schwellenwert, bei dessen Unterschreiten keine Ansteuerimpulse erzeugt werden, wird verhindert, daß bei einem geringfügigen Absinken der Spannung an der zweiten Kapazität zu Beginn der Erzeugung der Ansteuerimpulse die Erzeugung der Ansteuerimpulse sofort wieder beendet wird.

Vorrichtungsmäßig wird die gestellte Aufgabe mit dem in Anspruch 7 angegebenen Merkmalen dadurch gelöst, dass der gemeinsame Verbindungspunkt der beiden Y-Kondensatoren über eine zweite Diode mit dem gemeinsamen Verbindungspunkt der ersten Diode und der zweiten Kapazität verbunden ist und daß einem Eingang des Impulsgebers ein von der Spannung über der zweiten Kapazität abhängiges Signal zugeführt ist, abhängig von dem der Impulsgeber Ansteuerimpulse für den steuerbaren Schalter erzeugt.

Gemäß einer Ausführungsform der Erfindung ist zwischen die zweite Kapazität und den Impulsgeber eine Anordnung mit einem ersten Schwellwertdetektor und einem zweiten steuerbaren Schalter geschaltet. Der erste Schwellwertdetektor liegt parallel zum Abgreifen der Spannung an der zweiten Kapazität, wobei der Ausgang des Schwellwertdetektors mit einem Steuereingang des zweiten steuerbaren Schalters verbunden ist, der einen Versorgungsspannungseingang des Impulsgebers mit dem gemeinsamen Verbindungspunkt der ersten Diode und der zweiten Kapazität verbindet. Der Schwellwertdetektor besitzt vorzugsweise ein Hystereseverhalten, das heißt der zweite steuerbare Schalter wird leitend angesteuert, wenn die Spannung über der zweiten Kapazität einen ersten Schwellenwert erreicht und der zweite Schalter wird gesperrt, wenn die Spannung über der zweiten Kapazität unter einen zweiten Schwellenwert abgesunken ist, wobei der zweite Schwellenwert kleiner als der erste Schwellenwert ist. Der Impulsgeber wird bei dieser Ausführungsform zur Erzeugung von Ansteuerimpulsen eingeschaltet, wenn der zweite Schalter einschaltet und die über der zweiten Kapazität anliegende Spannung als Versorgungsspannung an den Impulsgeber angelegt wird, und der Impulsgeber wird abgeschaltet, wenn der zweite Schalter abschaltet.

Zur Aufladung der zweiten Kapazität, die als Glättungskapazität in dem Sekundärkreis wirkt, ist nach dem erfindungsgemäßen Verfahren, bzw. bei dem erfindungsgemäßen Schaltnetzteil vorgesehen, an die Wechselspannungseingänge des Brückengleichrichters des Schaltnetzteils mindestens einen Kondensator anzuschließen und die von diesem Kondensator gesammelte Energie über eine Diode zu der an die Sekundärwicklung des Übertragers angeschlossenen Glättungskapazität zu übertragen. Besonders vorteilhaft ist es, die in vielen Schaltnetzteilen ohnehin aus Sicherheitsgründen an die Wechselspannungseingänge angeschlossenen Y-Kondensatoren zum Sammeln der Energie zu nutzen.

Sobald die Glättungskapazität auf eine vorgebbare Mindestspannung aufgeladen ist, wird diese Mindestspannung an die Versorgungsspannungseingänge des Impulsgebers des Schaltnetzteiles gelegt, um ihn einzuschalten. Weil der Impulsgeber nun Schaltimpulse an den steuerbaren Schalter im Primärkreis des Schaltnetzteiles abgibt, wird im Sekundärkreis die Ausgangsspannung des Schaltnetzteils langsam aufgebaut.

Eine Ausgestaltung des erfindungsgemäßen Verfahrens sieht im Übertrager eine zweite Sekundärwicklung vor, an die eine Reihenschaltung aus einer Diode und einer weiteren Kapazität angeschlossen ist, die nun aufgeladen wird, weil der Impulsgeber das Schaltnetzteil taktet. Sobald die Spannung an dieser weiteren Kapazität einen vorgegebenen Mindestwert erreicht, wird die an der Glättungskapazität abgreifbare Ausgangsspannung des Schaltnetzteiles an die Versorgungsspannung einer den Impulsgeber steuernden Steuereinheit, vorzugsweise ein Mikroprozessor, gelegt, um sie einzuschalten. Das Schaltnetzteil ist jetzt betriebsbereit und kann eine Last mit einer geregelten Spannung versorgen.

Das erfindungsgemäße Anlaufen des Schaltnetzteiles erfolgt in vier Verfahrensschritten.

Im ersten Verfahrensschritt wird am Wechselspannungseingang des Brückengleichrichters Energie gesammelt und auf eine Kapazität der Sekundärseite des Schaltnetzteils übertragen. Im folgenden zweiten Verfahrensschritt wird der Impulsgeber eingeschaltet, wenn die auf die Kapazität übertragene Energie - oder mit anderen Worten ausgedrückt, die Spannung an der Kapazität - einen vorgebbaren ersten Mindestwert erreicht. Im anschließenden dritten Verfahrensschritt wird wegen des eingeschalteten Impulsgebers die Ausgangsspannung des Schaltnetzteiles langsam auf den Sollwert aufgebaut. Schließlich wird im das Anlaufen beendenden vierten Verfahrensschritt die den Impulsgeber steuernde Steuereinheit eingeschaltet, wenn die Ausgangsspannung des Schaltnetzteils einen vorgebbaren zweiten Mindestwert erreicht. Es werden daher nacheinander der Impulsgeber und die ihn steuernde Steuereinheit beim Anlaufen des Schaltnetzteiles eingeschaltet.

Die Erfindung - sowohl das erfindungsgemäße Verfahren als auch das erfindungsgemäße Schaltnetzteil - wird anhand der Figuren näher beschrieben und erläutert. In der Zeichnung zeigen:

Fig. 1    ein erstes Ausführungsbeispiel,

Fig. 2    ein zweites Ausführungsbeispiel,

Fig. 3    ein drittes Ausführungsbeispiel der Erfindung.

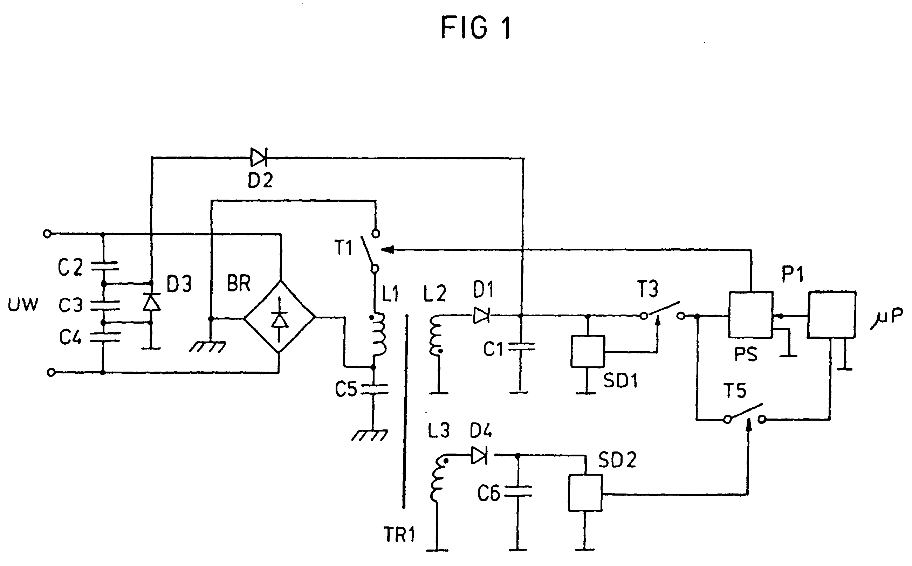

Bei dem in der Fig. 1 gezeigten Ausführungsbeispiel eines erfindungsgemäßen Schaltnetzteiles sind die Wechselspannungseingänge eines Brückengleichrichters BR, an denen eine Wechselspannung UW, zum Beispiel die Netzspannung, liegt über eine Reihenschaltung aus drei Kondensatoren C2, C3 und C4 miteinander verbunden. Die beiden Kondensatoren C2 und C4 sind die sogenannten Y-Kondensatoren. Parallel zum Kondensator C3 liegt eine Diode D3. Die Gleichspannungsausgänge des Brückengleichrichters BR sind über eine Reihenschaltung aus einer Primärwicklung L1 eines Übertragers TR1 und einer Kapazität C5 miteinander verbunden. Derjenige Gleichspannungsausgang des Brückengleichrichters BR, an den die Kapazität C5 angeschlossen ist, liegt auf der primärseitigen Masse, während der andere Gleichspannungsausgang des Brückengleichrichters BR, an dem die Primärwicklung L1 angeschlossen ist, über einen steuerbaren Schalter T1, vorzugsweise ein Feldeffekttransistor, mit der primärseitigen Masse verbindbar ist. Parallel zu einer Sekundärwicklung L2 des Übertragers TR1 liegt eine Reihenschaltung aus einer Diode D1 und einer Kapazität C1, die als Glättungskapazität vorgesehen ist. Der gemeinsame Verbindungspunkt der beiden Kondensatoren C2 und C3 ist über eine Diode D2 mit dem gemeinsamen Verbindungspunkt der Diode D1 und des Kondensators C1 verbunden. Der gemeinsame Verbindungspunkt der Kapazität C1 und der Sekundärwicklung L2 liegt auf der sekundärseitigen Masse. Der gemeinsame Verbindungspunkt der Kapazität C1 und der Diode D1 ist über einen steuerbaren Schalter T3, zum Beispiel ein pnp-Transistor, mit dem einen Versorgungsspannungseingang eines Impulsgebers PS verbunden, dessen anderer Versorgungsspannungseingang auf der sekundärseitigen Masse liegt und dessen Steuerausgang mit dem Steuereingang des steuerbaren Schalters T1 verbunden ist. Parallel zur Kapazität C1 liegt ein Schwellwertdetektor SD1, dessen Steuerausgang mit dem Steuereingang des steuerbaren Schalters T3 verbunden ist. Der Übertrager TR1 weist eine zweite Sekundärwicklung L3 auf, zu der ebenso wie zu der zweiten Sekundärwicklung eine Reihenschaltung aus einer Diode D4 und einer Kapazität C6 parallel geschaltet ist. Der gemeinsame Verbindungspunkt der Kapazität C6 und der zweiten Sekundärwicklung L3 liegt auf der sekundärseitigen Masse. Parallel zur Kapazität C6 liegt ein Schwellwertdetektor SD2, dessen Ausgang mit dem Steuereingang eines steuerbaren Schalters T5, zum Beispiel ein pnp-Transistor, verbunden ist, der den einen Versorgungsspannungseingang des Impulsgebers PS mit dem einen Versorgungsspannungseingang einer Steuereinheit μP verbindet, deren anderer Versorgungsspannungseingang auf der sekundärseitigen Masse liegt. Beispielsweise kann für die Steuereinheit μP ein Mikroprozessor eingesetzt werden. Der Steuerausgang P1 der Steuereinheit μP ist mit dem Steuereingang des Impulsgebers PS verbunden.

Um die Funktion des in der Fig. 1 abgebildeten ersten Ausführungsbeispieles eines erfindungsgemäßen Schaltnetzteiles deutlicher erläutern zu können, werden zunächst die Energieverhältnisse auf der Primär- und auf der Sekundärseite des Schaltnetzteils erörtert.

Die Wechselspannung UW liegt an der Reihenschaltung aus den drei Kondensatoren C2, C3 und C4. Die Kondensatoren C2 und $C_4$ sind die sogenannten Y-Kondensatoren, die aus Sicherheitsgründen hohen Anforderungen genügen und deren Kapazität die Summe von 4,7 nF nicht überschreiten darf. Üblicherweise ist der gemeinsame Verbindungspunkt der beiden Y-Kondensatoren C2 und C4 auf die sekundärseitige Masse gelegt, jedoch liegt bei dem Ausführungsbeispiel der Erfindung ein Kondensator C3 zwischen den beiden Y-Kondensatoren C2 und C4, um den Y-Kondensator C2 HF-mäßig auf die sekundärseitige Masse zu legen. Für die Y-Kondensatoren C2 und C4 wird eine Kapazität von zum Beispiel je 2 nF angenommen. Bei einem Weitbereichsnetzteil, das für Netzspannungen von 90 bis 270 V geeignet ist, berechnet sich der Strom durch die Y-Kondensatoren C2 und C4 ohne Berücksichtigung des Kondensators C3 bei einer Netzfrequenz von 50 Hz zu

$$Iy = (C \cdot U) \, / \, t = (2nF \cdot 90V \cdot \sqrt{2}) \, / \, 20ms = 13\mu A$$

Unter Berücksichtigung von Verlusten ist ein Wert von 10μA für den Strom Iy durch die Y-Kondensatoren C2 und C4 realistisch.

Der Ansteuerstrom Is eines MOS-Feldeffekttransistors mit einer Gate-Kapazität von 1 nF und einer Schaltfrequenz von 20 kHz beträgt bei einer Gatespannung 10 V:

$$Is = (1nF - 10V)/50\mu s = 200\mu A$$

Es ist also bei einer Gatekapazität von nur 1 nF und einer verhältnismäßig niedrigen Schaltfrequenz von nur 20 kHz ein um den Faktor 20 höherer Strom erforderlich, als er über die Y-Kondensatoren transportiert werden kann.

Um einen ersten Ansteuerimpuls von der Sekundär- auf die Primärseite des Schaltnetzteils liefern zu können, wird der geringe Strom Iy durch die Y-Kondensatoren C2 und C4 erst zu einer größeren Energiemenge aufgesammelt. Um den Ansteuerstrom Is des als steuerbaren Schalter eingesetzten MOS-Feldeffekttransistors an den Strom Iy durch die Y-Kondensatoren C2 und C4 anzugleichen, ist die Schaltfrequenz auf 1 kHz abzusenken. Jedoch ist ein Anlauf eines Schaltnetzteiles mit einer derart niedrigen Frequenz nicht möglich.

Wenn aber erst einmal genügend Energie zum Übertragen des ersten Ansteuerimpulses gesammelt ist, so kann durch Senden dieses Ansteuerimpulses eine vielmal größere Energie vom Übertrager TR1 auf die Sekundärseite übertragen werden. Die Energie Es eines Ansteuerimpulses berechnet sich unter den zuvor gemachten Annahmen zu:

$$Es = 0,5 - C - U^2 = 0,5 - 10nF - (10V)^2 = 0,5\mu Ws$$

Der Übertrager eines Schaltnetzteiles für eine Leistung von 100 W und mit einer Schaltfrequenz von 20 kHz kann die Energie Etr speichern:

$$Etr = 100W/20kHz = 5000\mu Ws$$

Das Verhältnis der beiden Energiemengen Etr zu Es beträgt demnach

$$Etr/Es = 5000\mu Ws/0,5\mu Ws = 10\,000$$

Nach Aufsammeln der für einen Ansteuerimpuls nötigen Energie und Senden dieses Ansteuerimpulses kann eine um den Faktor 10 000 mal größere Energie zurückgewonnen werden. Diese Energie kann auch über einen Flusswandler übertragen werden.

Der durch die beiden Y-Kondensatoren C2 und C4 fließende Wechselstrom wird durch die beiden Dioden D2 und D3 gleichgerichtet und lädt die Kapazität C1 auf der Sekundärseite auf, die als Energiespeicher zur Erzeugung des ersten Ansteuerimpulses dient.

Wenn der Wert der Kapazität C1 zu 1 μF gewählt ist und die Kapazität C1 auf eine Spannung von 10 V aufgeladen werden soll, so berechnet sich die maximale Ladezeit tl zu:

$$tl = (C1 - U)/l = (1\mu F - 10\,V)/10\mu A = 1s$$

Eine Wartezeit von einer Sekunde ist noch akzeptabel. Die in der Kapazität C1 gespeicherte Energie EC1 beträgt dann:

$$EC1 = 0,5 - 1\mu F - (10V)^2 = 50\mu Ws$$

Das Verhältnis EC1 zu Es beträgt

$$EC1/Es = 50\mu Ws/0,5\mu Ws = 100$$

Selbst unter Berücksichtigung zur erwartender hoher Übertragungsverluste im Übertrager TR1 steht somit genügend Energie zur Erzeugung und Übertragung des ersten Ansteuerimpulses zur Verfügung. Aufgrund des außerordentlich hohen Verhältnisses Etr/Es = 10000 ist auch die Fortsetzung des Anlaufs sichergestellt.

Der durch die Y-Kondensatoren C2 und C4 fließende Wechselstrom wird durch die Dioden D2 und D3 gleichgerichtet. Der auf diese Weise erzeugte Gleichstrom lädt die Kapazität C1 auf, für die beispielsweise ein Elektrolyt-Kondensator geeignet ist. Der Kondensator C3, der zwischen den beiden Y-Kondensatoren C2 und C4 liegt, stellt die HF-mäßige Verbindung zwischen dem Y-Kondensator C2 und der sekundärseitigen Masse her, damit die Entstörfunktion der beiden Y-Kondensatoren C2 und C4 erhalten bleibt.

Sobald der Schwellwertdetektor SD1 an der Kapazität C1 eine Spannung detektiert, die einen ersten Schwellenwert, bzw. den vorgebbaren Mindestwert erreicht, schließt er den steuerbaren Schalter T3, so dass der Impulsgeber PS mit Spannung versorgt wird und Schaltimpulse an den steuerbaren Schalter T1 abgibt, um ihn zu öffnen und zu schließen. Durch das Takten des steuerbaren Schalters T1 wird Energie von der Primärseite auf die Sekundärseite des Übertragers TR1 übertragen, so dass sich langsam an der Kapazität C1 die Ausgangsspannung des Schaltnetzteiles aufbaut. Weil von der Primärwicklung L1 auch Energie in die zweite Sekundärwicklung L3 des Übertragers TR1 übertragen wird, wird die Kapazität C6 ebenfalls aufgeladen. Sobald der Schwellwertdetektor SD2 eine Spannung an der Kapazität C6 detektiert, die einen vorgebbaren zweiten Mindestwert überschreitet, wird der steuerbare Schalter T5 geschlossen, um auch die Steuereinheit µP mit Spannung zu versorgen. Die Steuereinheit µP steuert nun den Impulsgeber PS. Der Anlaufvorgang des Schaltnetzteiles ist damit beendet.

Der Schwellwertdetektor besitzt vorzugsweise ein Hystereseverhalten, das heißt der Schwellwertdetektor sperrt den steuerbaren Schalter T3 erst dann wieder, wenn die Spannung an der zweiten Kapazität unter einen zweiten Schwellenwert abgesunken ist, der niedriger als der erste Schwellenwert ist. Beim Einschalten des Schalters T3 erfolgt die Spannungsversorgung des Impulsgebers aus der zweiten Kapazität C2, woraus kurz nach dem Einschalten ein Absinken der Spannung über der zweiten Kapazität resultiert. Da der zweite Schwellwert, der das Abschalten bestimmt, kleiner als der erste Schwellwert ist, der das Einschalten bestimmt, wird verhindert, dass bei einem Absinken der Spannung über der Kapazität nach dem Einschalten des Schalters T3 dieser sofort wider gesperrt und die Spannungsversorgung des Impulsgebers unterbrochen wird.

Die Anordnung aus dem Schwellwertdetektor SD1 und dem Schalter T3 liefert an den Versorgungsspannungseingang des Impulsgebers bei dem in Fig. 1 dargestellten Ausführungsbeispiel ein von der Spannung über der zweiten Kapazität C1 abhängiges Signal, wobei dieses Signal zur Spannungsversorgung des Impulsgebers dient und der über der Kapazität C1 anliegenden Spannung entspricht, wenn diese Spannung den ersten Schwellenwert übersteigt.

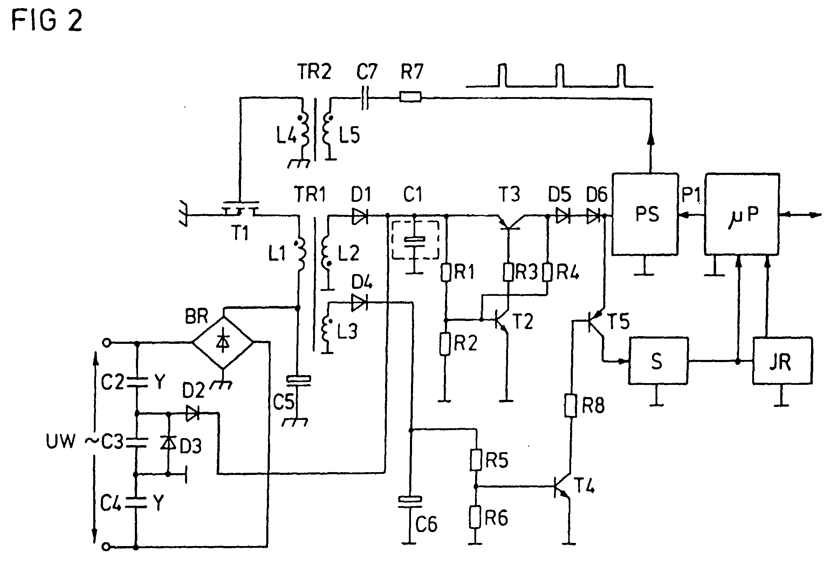

Das in der Figur 2 gezeigte zweite Ausführungsbeispiel eines erfindungsgemäßen Schaltnetzteiles zeigt primärseitig denselben Aufbau wie das in der Fig. 1 abgebildete Schaltnetzteil.

Die Wechselspannungseingänge eines Brückengleichrichters BR, an denen eine Wechselspannung UW anliegt, sind über eine Reihenschaltung aus drei Kondensatoren C2, C3 und C4 miteinander verbunden. Die beiden Kondensatoren C2 und C4 dienen als sogenannte Y-Kondensatoren der Entstörung. Parallel zum Kondensator C3 ist eine Diode D3 geschaltet. Der eine gemeinsame Verbindungspunkt der Kapazität C3 und der Diode D3 liegt auf der sekundärseitigen Masse. Parallel zu den Gleichspannungsausgängen des Brückengleichrichters BR liegt eine Kapazität C5. Der eine Gleichspannungsausgang des Brückengleichrichters BR liegt auf der primärseitigen Masse, während der andere Gleichspannungsausgang des Brückengleichrichters BR über die Primärwicklung L1 eines Übertragers TR1 mit der Drain-Elektrode eines Feldeffekttransistors T1 verbunden ist, dessen Source-Elektrode auf der primärseitigen Masse liegt. Parallel zu der ersten Sekundärwicklung L2 des Übertragers TR1 liegt eine Reihenschaltung aus einer Diode D1 und einer Kapazität C1. Der gemeinsame Verbindungspunkt der ersten Sekundärwicklung L2 und der Kapazität C1 liegt auf der sekundärseitigen Masse. Der gemeinsame Verbindungspunkt der beiden Kondensatoren C2 und C3 ist über eine Diode D2 mit dem gemeinsamen Verbindungspunkt der Diode D1 und der Kapazität C1 verbunden. Der gemeinsame Verbindungspunkt der Diode D1 und der Kapazität C1 ist über die Emitter-Kollektor-Strecke eines als Schalter dienenden Transistors T3 sowie zwei in Reihe dazu geschaltete Dioden D5 und D6 mit dem einen Versorgungsspannungseingang eines Impulsgebers PS verbunden, dessen anderer Versorgungsspannungseingang auf der sekundärseitigen Masse liegt. Parallel zur Kapazität C1 liegt ein Spannungsteiler aus einem Widerstand R1 und R2, dessen Mittelabgriff mit der Basis eines Transistors T2 und über einen Widerstand R4 mit dem Kollektor des Transistors T3 verbunden ist. Die Basis des Transistors T3 liegt über eine Reihenschaltung aus einem Widerstand R3 und der Kollektor-Emitter-Strecke eines Transistors T2 auf der sekundärseitigen Masse.

Parallel zu einer zweiten Sekundärwicklung L3 des Übertragers TR1 liegt eine Reihenschaltung aus einer Diode D4 und einer Kapazität C6. Der gemeinsame Anschluss der zweiten Sekundärwicklung L3 und der Kapazität C6 liegt auf der sekundärseitigen Masse. Parallel zur Kapazität C6 liegt ein Spannungsteiler aus einem Widerstand R5 und R6, dessen Mittelabgriff mit der Basis eines Transistors T4 verbunden ist. Der Emitter des Transistors T4 liegt auf der sekundärseitigen Masse, während dessen Kollektor über einen Widerstand R8 mit der Basis eines Transistors T5 verbunden ist. Der eine Versorgungsspannungseingang des Impulsgebers PS ist über die Emitter-Kollektor-Strecke des Transistors T5 mit dem Eingang eines Spannungsstabilisators S verbunden, dessen Ausgang mit dem einen Versorgungsspannungseingang einer Steuereinheit µP und eines Infrarotverstärkers IR verbunden ist. Die anderen Versorgungsspannungseingänge der Steuereinheit µP, die zum Beispiel ein Mikroprozessor sein kann, und des Infrarotverstärkers IR liegen auf der sekundärseitigen Masse. Der Steuerausgang der Steuereinheit µP ist mit dem Steuereingang des Impulsgebers PS verbunden, dessen Impulsausgang über ein RC-Glied aus einem Widerstand R7 und einer Kapazität C7 mit dem einen Anschluss der Primärwicklung L5 eines Übertragers TR2 verbunden, deren anderer Anschluss auf der sekundärseitigen Masse liegt. Der eine Anschluss der Sekundärwicklung L4 des Übertragers TR2 liegt auf der primärseitigen Masse, während deren anderer Anschluss mit der Gate-Elektrode des MOS-Feldeffekttransistors T1 verbunden ist.

Der Spannungsteiler aus den Widerständen R1 und R2 sowie der Transistor T2, der Widerstand R3 und der Widerstand R4 bilden den Schwellwertdetektor SD1, während der Schwellwertdetektor SD2 aus dem Spannungsteiler mit den Widerständen R5 und R6, aus dem Transistor T4 und dem Widerstand R8 aufgebaut ist.

Der Widerstandsteiler aus den Widerständen R1 und R2 ist hochohmig ausgeführt, damit er nur einen geringen Teil des von den Y-Kondensatoren C2 und C4 gelieferten Stromes gegen die sekundärseitige Masse ableitet. Wenn die Spannung an der Kapazität C1 den vorgebbaren Mindestwert erreicht, wird der Transistor T2 leitend, so dass der Schalttransistor einen Basisstrom erhält und deshalb ebenfalls in den leitenden Zustand übergeht. Weil die am Kollektor des Schalttransistors T3 ansteigende Spannung über den Widerstand R4 auf die Basis des Transistors T2 rückgekoppelt ist, werden die beiden Transistoren T2 und T3 nun voll durchgeschaltet. Um diese Rückkopplung nicht zu beeinträchtigen, wird durch die Flussspannungen der beiden Dioden D5 und D6 der Impulsgeber zunächst aber noch stromlos gehalten. Erst wenn die Spannung am Kollektor des Transistors T3 die beiden Diodenschwellen überwunden hat, wird der Impulsgeber PS mit einer Versorgungsspannung versorgt und sendet daher den ersten Einschaltimpuls über das RC-Glied aus dem Widerstand R7 und der Kapazität C7 an die Primärwicklung L5 des Übertragers TR2. Durch die in der Sekundärwicklung L4 des Übertragers TR2 induzierte Spannung, die an der Gate-Elektrode des MOS-Feldeffekttransistors T1 anliegt, wird dieser Schalttransistor T1 eingeschaltet. Die Dauer des Einschaltimpulses bestimmt der Impulsgenerator PS. Während des Einschaltimpulses liegt die vom Brückengleichrichter BR gelieferte Gleichspannung an der Kapazität C5, für die vorzugsweise ein Elektrolytkondensator vorgesehen ist. Wegen des leitenden MOS-Transistors T1 liegt diese Spannung auch an der Primärwicklung L1 des Übertragers TR1. Der Wickelsinn der Sekundärwicklung L2 des Übertragers TR1 ist so gewählt, dass ein Durchflusswandler gebildet wird. Die Kapazität C1 wird nun durch den von der Sekundärwicklung L2 gelieferten und durch die Diode D1 fließenden Strom weiter aufgeladen. Der Aufladestrom durch die Diode D1 hängt von der Höhe der Wechselspannung UW am Brückengleichrichter BR und vom Kopplungsgrad zwischen der Primärwicklung L1 und der Sekundärwicklung L2 des Übertragers TR1 ab. Zur Strombegrenzung kann ein Widerstand oder eine Drossel mit einer Freilaufdiode vorgesehen sein. Die erste Sekundärwicklung L2 ist als Durchflusswandler ausgeführt und die zweite Sekundärwicklung L3 ist als Sperrwandler ausgeführt, weil bei dieser Konfiguration ein sofortiges Nachladen der Kapazität C1 auch bei noch niedrigen Sekundärspannungen an dem Sperrwandler aus der Sekundärwicklung L3 und der Diode D4 ermöglicht wird. Dies hat den Vorteil, dass die Spannung an der Kapazität C1 über dem zum Betrieb des Impulsgebers PS notwendigen Mindestwert liegt.

Nach dem Einschaltimpuls für den MOS-Feldeffekttransistor T1 gibt der Übertrager TR1 seine magnetische Energie über die zweite Sekundärwicklung L3 und die Diode D4 an die Kapazität C6 ab, die ebenfalls wie die Kapazität C1 vorzugsweise als Elektrolytkondensator ausgeführt ist. Weil der Wickelsinn der Sekundärwicklung L3 - die als Sperrwandler ausgeführt ist - dem Wickelsinn der ersten Sekundärwicklung L2 entgegengesetzt ist, wird die Kapazität C1 jetzt hauptsächlich durch den Betriebsstrom für den Impulsgenerator PS entladen, der über den Transistor T3 und die Dioden D5 und D6 fließt. Sinkt die Versorgungsspannung am Impulsgeber PS unter einen vorgebbaren Schwellwert, so gibt der Impulsgenerator PS den nächsten Einschaltimpuls an den MOS-Transistor T1 ab. Durch diese Maßnahme wird die Spannung an der Kapazität C1 stets über dem vorgegebenen Mindestwert gehalten. Der Eigenstromverbrauch des Impulsgebers PS und die Breite der Einschaltimpulse bestimmen dabei die Frequenz. Das Tastverhältnis zwischen dem Einschaltimpuls und der Periodendauer ist so groß gewählt, dass der Übertrager TR1 bis zum nächsten Einschaltimpuls genügend Zeit zur Entmagnetisierung hat. Wegen der Sperrwandlerfunktion der zweiten Sekundärwicklung L3 des Übertragers TR1 wird die Kapazität C6 immer weiter aufgeladen, bis die Spannung an der Kapazität C6 den vorgebbaren Mindestwert erreicht, bei dem der Transistor T4 in den leitenden Zustand übergeht. Mit steigender Spannung an der Kapazität C6 verkürzt sich die Entmagnetisierungszeit des Übertragers TR1. Der durchgeschaltete Transistor T4 zieht über den Widerstand R8 die Basis des Transistors T5 auf die sekundärseitige Masse, so dass der Transistor T5 leitend wird und die am gemeinsamen Verbindungspunkt der Diode D6 und dem einen Versorgungsspannungseingang des Impulsgebers PS herrschende Spannung an den Eingang des Spannungsstabilisators S legt. Sowohl die Steuereinheit µP als auch der Infrarotverstärker IR erhalten deshalb eine stabilisierte Versorgungsspannung. Das Einschalten der Steuereinheit µP erst nach dem Einschalten des Impulsgebers PS hat den Vorteil, dass der Stromverbrauch während des ersten Teils des Anlaufs gering ist, und dass die Schaltfrequenz tief genug liegt, um genügend Zeit zur Entmagnetisierung des Übertragers TR1 zur Verfügung zu haben.

Wenn die Steuereinheit µP nur einen geringen Strom benötigt, sind die Widerstände R5, R6 und R8 sowie die Transistoren T4 und T5 nicht erforderlich. Wenn für die Steuereinheit µP beispielsweise ein Mikroprozessor in CMOS-Technologie ohne Querstrom vorgesehen ist, genügt es auch, den Oszillator verzögert freizugeben, falls er nicht von vornherein verzögert anschwingt.

Die Steuereinheit µP wird eingeschaltet, läuft an und übernimmt die Steuerung des Impulsgebers PS. Die Steuereinheit µP übernimmt auch nach dem Anlauf die Steuerung des Schaltnetzteiles für alle vorgesehenen Betriebsarten, falls er vom Infrarotverstärker IR die entsprechenden Einschaltbefehle erhält. Anderenfalls kann das Schaltnetzteil beispielsweise im Standby-Zustand verbleiben.

Weil die erste Sekundärwicklung L2 des Übertragers TR1 und die Diode D1 einen Durchflusswandler bilden, lässt sich der Standby-Betrieb so gestalten, dass die Spannung an der Kapazität C1 von der Steuereinheit µP unabhängig von der Wechselspannung UW am Eingang des Schaltnetzteiles geregelt wird, während die Spannung am Sperrwandler aus der zweiten Sekundärwicklung L3 und der Diode D4 stark absinkt. Durch diese Maßnahme kann der Wirkungsgrad im Standby-Betrieb in vorteilhafter Weise erhöht werden.

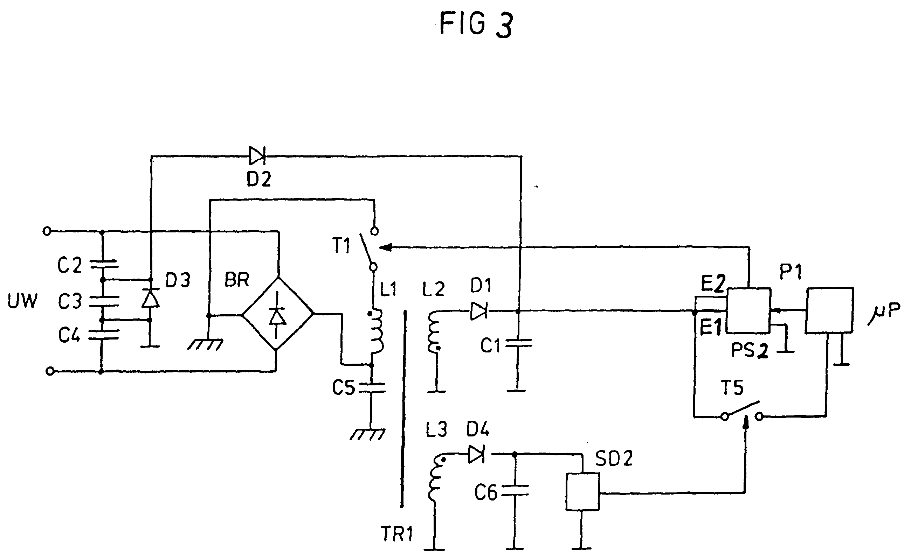

Fig. 3 zeigt ein weiteres Ausführungsbeispiel eines erfindungsgemäßen Schaltnetzteils, das sich von den in den Fig. 1 und 2 dargestellten Schaltnetzteilen durch die Wahl des Impulsgebers und durch die Zuführung der Spannung über der Kapazität C1 zu dem Impulsgeber PS unterscheidet. Bei den zuvor beschriebenen Ausführungsbeispielen wird der Impulsgeber PS abhängig von der Spannung über der zweiten Kapazität C1 an die zweite Kapazität C1 angeschlossen, um eine Spannungs- und Stromversorgung zu gewährleisten. Der Impulsgeber kann dabei nur Strom aufnehmen, wenn der Schalter T3 geschlossen ist.

Demgegenüber weist der Impulsgeber PS2 nach Fig. 3 einen ersten Eingang E1 und einen zweiten Eingang E2 auf, wobei einer E1 der beiden Eingänge als Spannungsversorgungseingang und der andere E2 der beiden Eingänge als Spannungsdetektionseingang dient. Der gemeinsame Knoten der Diode D1 und der Kapazität C1 ist bei diesem Ausführungsbeispiel direkt an die beiden Eingänge E1, E2 angeschlossen. Abhängig von der an dem Spannungsdetektionseingang E2 anliegenden Spannung nimmt der Impulsgeber PS2 einen ersten oder einen zweiten Zustand an, wobei der Impulsgeber PS2 im ersten Zustand keine Ansteuerimpulse für den steuerbaren Schalter T1 erzeugt und einen gegenüber dem zweiten Zustand geringen Strom über den Spannungsversorgungseingang E1 aufnimmt. Dieser erste Zustand entspricht einem Standby-Zustand des Impulsgebers. Im zweiten Zustand erzeugt der Impulsgeber PS2 Ansteuerimpulse für den steuerbaren Schalter T1 und nimmt hierzu einen gegenüber dem ersten Zustand höheren Strom über den Spannungsversorgungseingang auf. Der zweite Zustand entspricht einem Betriebszustand des Impulsgebers PS2. Der Impulsgeber ist derart ausgestaltet, dass er vom ersten Zustand in den zweiten Zustand übergeht, wenn die Spannung an dem Spannungsdetektionseingang einen ersten Schwellenwert übersteigt und dass der Impulsgeber von dem zweiten Zustand in den ersten Zustand übergeht, wenn die Spannung an dem Spannungsdetektionseingang einen zweiten Schwellenwert unterschreitet, wobei der zweite Schwellenwert vorzugsweise kleiner als der erste Schwellenwert ist.

Die dem Spannungsdetektionseingang E2 bei diesem Ausführungsbeispiel zugeführte Spannung dient als Signal, abhängig von dem der Impulsgeber PS2 Ansteuerimpulse für den Schalter T1 erzeugt.

Ein erster Vorteil der Erfindung ist darin zu sehen, dass den ohnehin in einem Schaltnetzteil vorhandenen Y-Kondensatoren eine zweite Aufgabe zukommt. Ein zweiter Vorteil liegt darin, dass alle weiteren zusätzlichen diskreten Bauteile mit niedriger Spannung betreibbar sind, so dass die Schaltung gut zur Integration geeignet ist.

**Patentansprüche**

1. Verfahren zum Anlaufen eines Schaltnetzteiles, bei dem die Wechselspannungseingänge eines Brückengleichrichters (BR), an denen eine Wechselspannung (UW) liegt, über eine Reihenschaltung aus zwei Y-Kondensatoren (C2, C4) miteinander verbunden sind, bei dem an die Gleichspannungsausgänge des Brückengleichrichters (BR) eine Parallelschaltung aus einer ersten Kapazität (C5) und aus einer Reihenschaltung, bestehend aus der Primärwicklung (L1) eines ersten Übertragers (TR1) und eines ersten steuerbaren Schalters (T1), angeschlossen ist, dessen Steuereingang mit dem Ausgang eines Impulagebers (PS; PS2) verbunden ist, und bei dem parallel zu einer ersten Sekundärwicklung (L2) des ersten Übertragers (TR1) eine Reihenschaltung aus einer ersten Diode (D1) und einer zweiten Kapazität (C1) liegt,
   **dadurch gekennzeichnet, dass** die von den Y-Kondensatoren (C2, C4) gesammelte Energie auf die zweite Kapazität (C1) übertragen wird und dass der Impulsgeber (PS; PS2) Impulse zur Ansteuerung des steuerbaren Schalters (T1) abhängig von einer an der zweiten Kapazität (C1) abgreifbaren Spannung erzeugt.

2. Verfahren nach Anspruch 1,
   **dadurch gekennzeichnet, dass** der Impulsgeber (PS; PS2) Ansteuerimpulse erzeugt, wenn die an der zweiten Kapazität (C1) abgreifbare Spannung einen ersten Schwellenwert übersteigt.

3. Verfahren nach Anspruch 1 oder 2,
   **dadurch gekennzeichnet, dass** der Impulsgeber (PS; PS2) keine Ansteuerimpulse erzeugt, wenn die an der zweiten Kapazität (C1) abgreifbare Spannung einen zweiten Schwellenwert unterschreitet.

4. Verfahren nach Anspruch 1,
   **dadurch gekennzeichnet, dass** die an der zweiten Kapazität (C1) abgreifbare Spannung erst dann an einen Versorgungsspannungseingang des Impulsgebers (PS) gelegt wird, wenn sie einen ersten vorgebbaren Mindestwert erreicht.

5. Verfahren nach einem der vorangehenden Ansprüche,
   **dadurch gekennzeichnet, dass** an eine den Impulsgeber (PS) steuernde Steuereinheit (µP) die Versorgungsspannung erst eine vorgebbare Zeitspanne nach dem Einschalten des Impulsgebers (PS) gelegt wird.

6. Verfahren nach Anspruch 5,
   **dadurch gekennzeichnet, dass** mittels einer zweiten Sekundärwicklung (L3) des ersten Übertragers (TR1), zu der eine Reihenschaltung aus einer dritten Diode (D4) und einer dritten Kapazität (C6) parallel geschaltet ist, eine Spannung an der dritten Kapazität (C6) erzeugt wird, und dass die an der zweiten Kapazität (C1) abgreifbare Spannung an eine Steuereinheit (µP) gelegt wird, wenn die Spannung an der dritten Kapazität (C6) einen zweiten vorgebbaren Mindestwert erreicht.

7. Schaltnetzteil mit einer Anlaufschaltung, bei dem die Wechselspannungseingänge eine Brückgleichrichters (BR), an denen eine Wechselspannung (UW) liegt, über eine Reihenschaltung aus zwei Y-Kondensatoren (C2, C4) miteinander verbunden sind, bei dem an die Gleichspannungsausgänge des Brückengleichrichters (BR) eine Parallelschaltung aus einer ersten Kapazität (C5) und aus einer Reihenschaltung, bestehend aus der Primärwicklung (L1) eines ersten Übertragers (TR1) und eines ersten steuerbaren Schalters (T1), angeschlossen ist, dessen Steuereingang mit dem Ausgang eines Impulsgebers (PS) verbunden ist, und bei dem parallel zu einer ersten Sekundärwicklung (L2) des ersten Übertragers (TR1) eine Reihenschaltung aus einer ersten Diode (D1) und einer zweiten Kapazität (C1) liegt,
   **dadurch gekennzeichnet, dass** der gemeinsame Verbindungspunkt der beiden Y-Kondensatoren (C2, C4) über eine zweite Diode (D2) mit dem gemeinsamen Verbindungspunkt der ersten Diode (D1) und der zweiten Kapazität (C1) verbunden ist und dass einem Eingang des Impulsgebers (PS; PS2) ein von einer Spannung über der zweiten Kapazität (C1) abhängiges Signal zugeführt ist.

8. Schaltnetzteil nach Anspruch 7,
   **dadurch gekennzeichnet, dass** an die zweite Kapazität (C1) eine Anordnung mit einem ersten Schwellwertdetektor (SD1) und einem zweiten steuerbaren Schalter (T3) angeschlossen ist, wobei parallel zur zweiten Kapazität (C1) der erste Schwellwertdetektor (SD1) zum Abgreifen der Spannung an der zweiten Kapazität (C1) liegt, dessen Ausgang mit dem Steuereingang eines zweiten steuerbaren Schalters (T3) verbunden ist, der einen Versorgungsspannungseingang des Impulsgebers (PS) mit dem gemeinsamen Verbindungspunkt der ersten Diode (D1) und der zweiten Kapazität (C1) verbindet.

9. Schaltnetzteil nach Anspruch 7 oder 8,
   **dadurch gekennzeichnet, dass** der erste Übertrager (TR1) eine zweite Sekundärwicklung (L3) aufweist, zu der eine Reihenschaltung aus einer dritten Diode (D4) und einer dritten Kapazität (C6) parallel geschaltet ist, und dass parallel zur dritten Kapazität (C6) ein zweiter Schwellwertdetektor (SD2) liegt, dessen Ausgang mit dem Steuereingang eines zweiten steuerbaren Schalters (T5) verbunden ist, der den Versorgungsspannungseingang des Impulsgebers (PS) mit dem Versorgungsspannungseingang einer Steuereinheit (µP) verbindet, deren Steuerausgang mit dem Steuereingang des Impulsgebers (PS) verbunden ist.

10. Schaltnetzteil nach Anspruch 7, 8 oder 9,
    **dadurch gekennzeichnet, dass** zwischen dem ersten und dem zweiten Y-Kondensator (C2, C4) eine Parallelschaltung aus einer vierten Diode (D3) und einer vierten Kapazität (C3) liegt.

11. Schaltnetzteil nach einem der Ansprüche 7 bis 10,
    **dadurch gekennzeichnet, dass** zwischen dem zweiten steuerbaren Schalter (T3) und dem Versorgungsspannungseingang des Impulsgebers (PS) mindestens eine fünfte Diode (D5, D6) liegt.

12. Schaltnetzteil nach einem der Ansprüche 7 bis 11,
    **dadurch gekennzeichnet, dass** der Steuerausgang des Impulsgebers (PS) über ein RC-Glied aus einer fünften Kapazität (C7) und einem ersten Widerstand (R7) mit der Primärwicklung (L5) eines zweiten Übertragers (TR2) verbunden ist, dessen Sekundärwicklung (L4) mit dem ersten steuerbaren Schalter (T1) verbunden ist.

13. Schaltnetzteil nach Anspruch 12,
    **dadurch gekennzeichnet, dass** ein Gleichspannungsanschluss des Brückengleichrichters (BR), ein Anschluss des ersten steuerbaren Schalters (T1) und ein Anschluss der Sekundärwicklung (L4) des zweiten Übertragers (TR2) auf der primärseitigen Masse liegen, während ein gemeinsamer Verbindungspunkt der vierten Kapazität (C3) und der vierten Diode (D3), ein Anschluss der Primärwicklung (L5) des zweiten Übertragers (TR2) und ein Anschluss der ersten sowie der zweiten Sekundärwicklung (L2, L3) des ersten Übertragers (TR1) auf der sekundärseitigen Masse liegen.

14. Schaltnetzteil nach einem der Ansprüche 7 bis 13, **dadurch gekennzeichnet, dass** der Wickelsinn der ersten Sekundärwicklung (L2) des ersten Übertragers (TR1) so gewählt ist, dass ein Durchflusswandler gebildet wird.

15. Schaltnetzteil nach einem der Ansprüche 9 bis 14, **dadurch gekennzeichnet, dass** der Wickelsinn der zweiten Sekundärwicklung (L3) des ersten Übertragers (TR1) entgegengesetzt zum Wickelsinn der ersten Sekundärwicklung (L2) des ersten Übertragers (TR1) gewählt ist, so dass ein Sperrwandler gebildet wird.

16. Schaltnetzteil nach einem der vorangehenden Ansprüche,
**dadurch gekennzeichnet, dass** zwischen den beiden Y-Kondensatoren (C2, C4) eine Parallelschaltung aus einer vierten Kapazität (C3) und einer vierten Diode (D3) liegt, deren einer Anschluss auf der sekundärseitigen Masse liegt, während deren anderer Anschluss über eine zweite Diode (D2) mit dem gemeinsamen Anschluss der ersten Diode (D1) und der zweiten Kapazität (C1) verbunden ist, dass parallel zur zweiten Kapazität (C1) ein erster Spannungsteiler aus einem zweiten und dritten Widerstand (R1, R2) liegt, dass der gemeinsamen Verbindungspunkt der ersten Sekundärwicklung ($L_2$) des ersten Übertragers (TR1) und der zweiten Kapazität (C1) sowie der gemeinsame Verbindungspunkt der zweiten Sekundärwicklung (L3) des ersten Übertragers (TR1) und der dritten Kapazität (C6) auf der sekundärseitigen Masse liegen, dass der gemeinsame Verbindungspunkt der ersten Diode (D1) und der zweiten Kapazität (C1) über eine Reihenschaltung aus der E-mitter-Kollektor-Schaltung eines zweiten Transistors (T3) und aus einer fünften und einer sechsten Diode (D5, D6) mit dem einen Versorgungsspannungseingang des Impulsgebers (PS) verbunden ist, dessen anderer Versorgungsspannungseingang auf der sekundärseitigen Masse liegt, dass die Basis des zweiten Transistors (T3) über eine Reihenschaltung aus einem vierten Widerstand (R3) und der Kollektor-Emitter-Strecke eines dritten Transistors (T2) auf der sekundärseitigen Masse liegt, dass die Basis des dritten Transistors (T2) mit dem Mittelabgriff des ersten Spannungsteilers aus dem zweiten und dritten Widerstand (R1, R2) und über einen fünften Widerstand (R4) mit dem Kollektor des zweiten Transistors (T3) verbunden ist, dass der eine Versorgungsspannungseingang des Impulsgebers (PS), an den die sechste Diode (D6) angeschlossen ist, über eine Reihenschaltung aus der Emitter-Basis-Strecke eines vierten Transistors (T5), eines sechsten Widerstandes (R8) und der Kollektor-Emitter-Strecke eines fünften Transistors (T4) auf der sekundärseitigen Masse liegt, dass parallel zur dritten Kapazität (C6) ein zweiter Spannungsteiler aus einem siebten und einem achten Widerstand (R5, R6) liegt, dessen Mittelabgriff mit der Basis des fünften Transistors (T4) verbunden ist, dass der Emitter des vierten Transistors (T5) mit dem einen Versorgungsspannungseingang der Steuereinheit (μP) verbunden ist, deren anderer Versorgungsspannungseingang auf der sekundärseitigen Masse liegt, dass der Steuerausgang der Steuereinheit (μP) mit dem Steuereingang des Impulsgebers (PS) verbunden ist, dessen Impulsausgang über die Reihenschaltung aus dem RC-Glied, bestehend aus dem ersten Widerstand (R7) und der fünften Kapazität (C7), und der Primärwicklung (L5) des zweiten Übertragers (TR2) auf der sekundärseitigen Masse liegt, und dass der eine Anschluss der Sekundärwicklung (L4) des zweiten Übertragers (TR2) auf der primärseitigen Masse liegt, während der andere Anschluss der Sekundärwicklung (L4) des zweiten Übertragers (TR2) mit der Gate-Elektrode eines als ersten steuerbaren Schalter vorgesehenen Transistors (T1) verbunden ist.

17. Schaltnetzteil nach Anspruch 16,
**dadurch gekennzeichnet, dass** der Kollektor des vierten Transistors (T5) mit dem einen Versorgungsspannungseingang eines Infrarotverstärkers (IR) verbunden ist, dessen anderer Versorgungsspannungseingang auf der sekundärseitigen Masse liegt, und dass der Ausgang des Infrarot-Verstärkers (IR) mit der Steuereinheit (μP) verbunden ist.

18. Schaltnetzteil nach Anspruch 17,
**dadurch gekennzeichnet, dass** zwischen dem Kollektor des vierten Transistors (T5) einerseits und der Steuereinheit (μP) und dem Infrarot-Verstärker (IR) andererseits ein Spannungsstabilisator (S) liegt.

19. Schaltnetzteil nach einem der vorangehenden Ansprüche,
**dadurch gekennzeichnet, dass** für die Steuereinheit ein Mikroprozessor (μP) vorgesehen ist.

20. Schaltnetzteil nach einem der vorangehenden Ansprüche, **dadurch gekennzeichnet, dass** die Anlaufschaltung aus der zweiten bis sechsten Diode (D2, D3, D4, D5, D6), aus dem zweiten bis achten Widerstand (R1, R2, R3, R4, R8, R5, R6) sowie aus dem dritten, vierten und fünften Transistor (T2, T5, T4) als integrierte Schaltung ausgeführt ist.

**21.** Schaltnetzteil nach Anspruch 7,
**dadurch gekennzeichnet, dass**
der Impulsgeber (PS2) einen ersten Eingang (E1) zur Spannungsversorgung aufweist, der an den gemeinsamen Knoten der ersten Diode (D1) und der zweiten Kapazität (C1) angeschlossen ist.

**22.** Schaltnetzteil nach Anspruch 21,
**dadurch gekennzeichnet, dass**
der Impulsgeber (PS2) einen zweiten Eingang (E2) zur Spannungsdetektion aufweist, der an den gemeinsamen Knoten der ersten Diode (D1) und der zweiten Kapazität (C1) angeschlossen ist.

**23.** Schaltnetzteil nach Anspruch 21 oder 22,
**dadurch gekennzeichnet, dass**
der Impulsgeber (PS2) abhängig von dem an dem zweiten Eingang (E2) anliegenden Signal einen ersten Zustand, bei welchem keine Ansteuerimpulse an dessen Ausgang zur Verfügung stehen, oder einen zweiten Zustand, bei welchem Ansteuerimpulse an dessen Ausgang zur Verfügung stehen, annimmt.

**Claims**

**1.** Method for starting a switch-mode power supply, in which the AC voltage inputs of a bridge rectifier (BR) to which an AC voltage (UW) is applied are connected to one another via a series circuit formed from two Y capacitors (C2, C4), in which the DC voltage outputs of the bridge rectifier (BR) are connected to a parallel circuit comprising a first capacitance (C5) and a series circuit formed from the primary winding (L1) of a first transformer (TR1) and a first controllable switch (T1), whose control input is connected to the output of a pulse transmitter (PS; PS2), and in which a series circuit comprising a first diode (D1) and a second capacitance (C1) is connected in parallel with a first secondary winding (L2) of the first transformer (TR1) ,
**characterized in that** all the energy from the Y capacitors (C2, C4) is transferred to the second capacitance (C1), and **in that** the pulse transmitter (PS; PS2) produces pulses in order to drive the controllable switch (T1) as a function of a voltage which can be tapped off on the second capacitance (C1).

**2.** Method according to Claim 1,
**characterized in that** the pulse transmitter (PS; PS2) produces drive pulses when the voltage which can be tapped off on the second capacitance (C1) exceeds a first threshold value.

**3.** Method according to Claim 1 or 2,
**characterized in that** the pulse transmitter (PS; PS2) does not produce any drive pulses when the voltage which can be tapped off on the second capacitance (C1) falls below a second threshold value.

**4.** Method according to Claim 1,
**characterized in that** the voltage which can be tapped off on the second capacitance (C1) is applied to a supply voltage input of the pulse transmitter (PS) only when it reaches a first minimum value which can be predetermined.

**5.** Method according to one of the preceding claims,
**characterized in that** the supply voltage is applied to a control unit (μP) which controls the pulse transmitter (PS) only after a time interval, which can be predetermined, has elapsed following the pulse transmitter (PS) being switched on.

**6.** Method according to Claim 5,
**characterized in that** a voltage is produced on the third capacitance (C6) by means of a second secondary winding (L3) of the first transformer (TR1), in parallel with which a series circuit comprising a third diode (D4) and a third capacitance (C6) is connected, and **in that** the voltage which can be tapped off on the second capacitance (C1) is applied to a control unit (μP) when the voltage on the third capacitance (C6) reaches a second minimum value which can be predetermined.

**7.** Switch-mode power supply having a starting circuit, in which the AC voltage inputs of a bridge rectifier (BR) to which an AC voltage (UW) is applied are connected to one another via a series circuit formed from two Y capacitors (C2, C4), in which the DC voltage outputs of the bridge rectifier (BR) are connected to a parallel circuit comprising a first capacitance (C5) and a series circuit formed from the primary winding (L1) of a first transformer (TR1) and a first controllable switch (T1), whose control input is connected to the output of a pulse transmitter (PS), and in which a series circuit comprising a first diode (D1) and a second capacitance (C1) is connected in parallel with a first secondary winding (L2) of the first transformer (TR1),
**characterized in that** the common junction point of the two Y capacitors (C2, C4) is connected via a second diode (D2) to the common junction point of the first diode (D1) and of the second capacitance (C1), and **in that** one input of the pulse transmitter (PS; PS2) is supplied with a signal which is dependent on a voltage across the second capacitance (C1).

**8.** Switch-mode power supply according to Claim 7,
**characterized in that** the second capacitance (C1) is connected to an arrangement having a first threshold value detector (SD1) and a second controllable switch (T3), with the first threshold value detector (SD1) for tapping off the voltage on the second capacitance (C1) being connected in parallel with the second capacitance (C1), and its output is connected to the control input of a second controllable switch (T3) which connects a supply voltage input of the pulse transmitter (PS) to the common junction point of the first diode (D1) and of the second capacitance (C1)

9. Switch-mode power supply according to Claim 7 or 8,
   **characterized in that** the first transformer (TR1) has a second secondary winding (L3) in parallel with which a series circuit comprising a third diode (D4) and a third capacitance (C6) is connected, and **in that** a second threshold value detector (SD2) is connected in parallel with the third capacitance (C6) and its output is connected to the control input of a second controllable switch (T5) which connects the supply voltage input of the pulse transmitter (PS) to the supply voltage input of a control unit ($\mu$P), whose control input is connected to the control input of the pulse transmitter (PS).

10. Switch-mode power supply according to Claim 7, 8 or 9,
    **characterized in that** a parallel circuit comprising a fourth diode (D3) and a fourth capacitance (C3) is connected between the first and the second Y capacitor (C2, C4).

11. Switch-mode power supply according to one of Claims 7 to 10,
    **characterized in that** at least one fifth diode (D5, D6) is connected between the second controllable switch (T3) and the supply voltage input of the pulse transmitter (PS).

12. Switch-mode power supply according to one of Claims 7 to 11,
    **characterized in that** the control output of the pulse transmitter (PS) is connected via an RC element, comprising a fifth capacitance (C7) and a first resistor (R7), to the primary winding (L5) of a second transformer (TR2), whose secondary winding (L4) is connected to the first controllable switch (T1).

13. Switch-mode power supply according to Claim 12,
    **characterized in that** one DC voltage connection of the bridge rectifier (BR), one connection of the first controllable switch (T1) and one connection of the secondary winding (L4) of the second transformer (TR2) are connected to earth on the primary side, while a common junction point of the fourth capacitance (C3) and of the fourth diode (D3), one connection of the primary winding (L5) of the second transformer (TR2) and one connection of the first and of the second secondary winding (L2, L3) of the first transformer (TR1) are connected to earth on the secondary side.

14. Switch-mode power supply according to one of Claims 7 to 13,
    **characterized in that** the winding sense of the first secondary winding (L2) of the first transformer (TR1) is chosen so as to form a forward converter.

15. Switch-mode power supply according to one of Claims 9 to 14,
    **characterized in that** the winding sense of the second secondary winding (L3) of the first transformer (TR1) is chosen to be the opposite of the winding sense of the first secondary winding (L2) of the first transformer (TR1), so that a flyback converter is formed.

16. Switch-mode power supply according to one of the preceding claims,
    **characterized in that** a parallel circuit comprising a fourth capacitance (C3) and a fourth diode (D3) is connected between the two Y capacitors (C2, C4), one connection of which is connected to earth on the secondary side, while the other connection is connected via a second diode (D2) to the common connection of the first diode (D1) and of the second capacitance (C1), **in that** a first voltage divider comprising a second and a third resistor (R1, R2) is connected in parallel with the second capacitance (C1), **in that** the common junction point of the first secondary winding (L2) of the first transformer (TR1) and the second capacitance (C1) as well as the common junction point of the second secondary winding (L3) of the first transformer (TR1) and the third capacitance (C6) are connected to earth on the secondary side, **in that** the common junction point of the first diode (D1) and of the second capacitance (C1) is connected via a series circuit comprising the emitter-collector circuit of a second transistor (T3) and a fifth and a sixth diode (D5, D6) to one supply voltage input of the pulse transmitter (PS), and the other supply voltage input of the pulse transmitter (PS) is connected to earth on the secondary side, **in that** the base of the second transistor (T3) is connected via a series circuit comprising a fourth resistor (R3) and the collector-emitter path through a third transistor (T2) to earth on the secondary side, **in that** the base of the third transistor (T2) is connected to the centre tap of the first voltage divider comprising the second and the third resistor (R1, R2) and via a fifth resistor (R4) to the collector of the second transistor (T3), **in that** one supply voltage input of the pulse transmitter (PS), to which the sixth diode (D6) is connected, is connected via a series circuit comprising the emitter-base path through a fourth transistor (T5), a sixth resistor (R8) and the collector-emitter path through a fifth transistor (T4) to earth on the secondary side, **in that** a second voltage divider comprising a seventh and an eighth resistor (R5, R6) is connected in parallel with the third capacitance (C6) and its centre tap is connected to the base of the fifth transistor (T4), **in that** the emitter of the fourth transistor (T5) is connected to one supply voltage input of the control unit (μP) and its other supply voltage input is connected to earth on the secondary side, **in that** the control output of the control unit (μP) is connected to the control input of the pulse transmitter (PS), and the pulse output of the pulse transmitter (PS) is connected via a series circuit comprising the RC element, which is formed from the first resistor (R7) and the fifth capacitor (C7), and the primary winding (L5) of the second transformer (TR2) to earth on the secondary side, and **in that** one connection of the secondary winding (L4) of the second transformer (TR2) is connected to earth on the primary side, while the other connection of the secondary winding (L4) of the second transformer (TR2) is connected to the gate electrode of a transistor (T1) which is provided as the first controllable switch.

17. Switch-mode power supply according to Claim 16, **characterized in that** the collector of the fourth transistor (T5) is connected to one supply voltage input of an infrared amplifier (IR), and its other supply voltage input is connected to earth on the secondary side, and **in that** the output of the infrared amplifier (IR) is connected to the control unit (μP).

18. Switch-mode power supply according to Claim 17, **characterized in that** a voltage stabilizer (S) is connected between the collector of the fourth transistor (T5) on the one side, and the control unit (μP) and the infrared amplifier (IR) on the other side.

19. Switch-mode power supply according to one of the preceding claims, **characterized in that** a microprocessor (μP) is provided for the control unit.

20. Switch-mode power supply according to one of the preceding claims, **characterized in that** the starting circuit is in the form of an integrated circuit comprising the second to the sixth diode (D2, D3, D4, D5, D6), the second to the eighth resistor (R1, R2, R3, R4, R8, R5, R6), and the third, fourth and fifth transistor (T2, T5, T4).

21. Switch-mode power supply according to Claim 7, **characterized in that** the pulse transmitter (PS2) has a first input (E1) for supply voltage, and this first input (E1) is connected to the common node of the first diode (D1) and of the second capacitance (C1).

22. Switch-mode power supply according to Claim 21, **characterized in that** the pulse transmitter (PS2) has a second input (E2) for voltage detection, which second input (E2) is connected to the common node of the first diode (D1) and of the second capacitance (C1).

23. Switch-mode power supply according to Claim 21 or 22, **characterized in that** the pulse transmitter (PS2) assumes a first state, in which no drive pulses are available at its output, or a second state, in which drive pulses are available at its output, depending on the signal which is applied to the second input (E2).

**Revendications**

1. °) Procédé pour mettre en marche une alimentation à découpage, dans laquelle les entrées de tension alternative d'un redresseur en pont (BR) auxquelles est appliquée une tension alternative (UW) sont reliées l'une à l'autre au moyen d'un montage en série de deux condensateurs Y (C2, C4), aux sorties de tension continue du redresseur en pont (BR) est raccordé un montage en parallèle composé d'une première capacité (C5) et d'un montage en série comprenant l'enroulement primaire (L1) d'un premier transformateur (TR1) et un premier commutateur (T1) réglable dont l'entrée de commande est reliée à la sortie d'un générateur d'impulsions (PS ; PS2), et pour laquelle un montage en série comprenant une première diode (D1) et une deuxième capacité (C1) est placé en parallèle à un premier enroulement secondaire (L2) du premier transformateur (TR1), **caractérisé en ce que** l'énergie collectée par les condensateurs Y (C2, C4) est transmise à la deuxième capacité (C1) et le générateur d'impulsions (PS ; PS2) produit des impulsions pour exciter le commutateur (T1) réglable en fonction d'une tension qu'on peut prélever sur la deuxième capacité (C1).

2. Procédé selon la revendication 1, **caractérisé en ce que** le générateur d'impulsions (PS ; PS2) produit des impulsions d'excitation lorsque la tension qu'on peut prélever sur la deuxième capacité (C1) dépasse une première valeur seuil.

3. Procédé selon la revendication 1 ou 2, **caractérisé en ce que** le générateur d'impulsions (PS ; PS2) ne produit pas d'impulsion d'excitation lorsque la tension qu'on peut prélever sur la deuxième capacité (C1) est inférieure à une deuxième valeur seuil.

4. Procédé selon la revendication 1,
**caractérisé en ce que**
la tension qu'on peut prélever sur la deuxième capacité (C1) n'est appliquée à une entrée de tension d'alimentation du générateur d'impulsions (PS) que lorsqu'elle atteint une première valeur minimale prédéterminable.

5. Procédé selon l'une des revendications précédentes,
**caractérisé en ce que**
la tension d'alimentation n'est appliquée à une unité de commande (µP) qui commande le générateur d'impulsions (PS) qu'un certain temps prédéterminable après que le générateur d'impulsions (PS) est commuté.

6. Procédé selon la revendication 5,
**caractérisé en ce qu'**
au moyen d'un deuxième enroulement secondaire (L3) du premier transformateur (TR1) auquel est monté en parallèle un montage en série composé d'une troisième diode (D4) et d'une troisième capacité (C6), une tension est produite sur la troisième capacité (C6), et la tension qu'on peut prélever sur la deuxième capacité (C1) est appliquée à une unité de commande (µP) lorsque la tension sur la troisième capacité (C6) atteint une deuxième valeur minimale prédéterminable.

7. Alimentation à découpage comportant un circuit de mise en marche, dans laquelle les entrées de tension alternative d'un redresseur en pont (BR) auxquelles est appliquée une tension alternative (UW) sont reliées l'une à l'autre au moyen d'un montage en série de deux condensateurs Y (C2, C4), avec raccordé aux sorties de tension continue du redresseur en pont (BR) un montage en parallèle composé d'une première capacité (C5) et d'un montage en série comprenant l'enroulement primaire (L1) d'un premier transformateur (TR1) et un premier commutateur (T1) réglable dont l'entrée de commande est reliée à la sortie d'un générateur d'impulsions (PS ; PS2), et pour laquelle un montage en série comprenant une première diode (D1) et une deuxième capacité (C1) est placé en parallèle à un premier enroulement secondaire (L2) du premier transformateur (TR1),
**caractérisée en ce que**
le point de liaison commun des deux condensateurs Y (C2, C4) est relié au moyen d'une deuxième diode (D2) au point de liaison commun de la première diode (D1) et de la deuxième capacité (C1) et un signal dépendant de la tension sur la deuxième capacité (C1) est conduit à une entrée du générateur d'impulsions (PS ; PS2).

8. Alimentation à découpage selon la revendication 7,
**caractérisée en ce qu'**
un arrangement comportant un premier détecteur de valeur seuil (SD 1) et un deuxième commutateur réglable (T3) est raccordé à la deuxième capacité (C1), le premier détecteur de valeur seuil (SD1) pour prélever la tension sur la deuxième capacité (C1) étant en parallèle à la deuxième capacité (C1) dont la sortie est reliée à l'entrée de commande d'un deuxième commutateur réglable (T3) qui relie une entrée de tension d'alimentation du générateur d'impulsions (PS) au point de liaison commun de la première diode (D1) et de la deuxième capacité (C1).

9. Alimentation à découpage selon la revendication 7 ou 8,
**caractérisée en ce que**
le premier transformateur (TR1) présente un deuxième enroulement secondaire (L3) auquel est monté en parallèle un montage en série composé d'une troisième diode (D4) et d'une troisième capacité (C6) et en parallèle à la troisième capacité (C6) est monté un deuxième détecteur de valeur seuil (SD2) dont la sortie est reliée à l'entrée de commande d'une deuxième commutateur réglable (T5) qui relie l'entrée de tension d'alimentation du générateur d'impulsions (PS) à l'entrée de tension d'alimentation d'une unité de commande (µP) dont la sortie de commande est reliée à l'entrée de commande du générateur d'impulsions (PS).

10. Alimentation à découpage selon la revendication 7, 8 ou 9,
**caractérisée en ce qu'**
un circuit en parallèle composé d'une quatrième diode (D3) et d'une quatrième capacité (C3) est placé entre le premier et le deuxième condensateur Y (C2, C4).

11. Alimentation à découpage selon l'une des revendications 7 à 10,
**caractérisée en ce qu'**
entre le deuxième commutateur réglable (T3) et l'entrée de tension d'alimentation du générateur d'impulsions (PS) il y a au moins une cinquième diode (D5, D6).

12. Alimentation à découpage selon l'une des revendications 7 à 11,
**caractérisée en ce que**
la sortie de commande du générateur d'impulsions (PS) est reliée au moyen d'un circuit RC composé d'une cinquième capacité (C7) et d'une première résistance (R7) à l'enroulement primaire (L5) d'un deuxième transformateur (TR2) dont l'enroulement secondaire (L4) est relié au premier commutateur réglable (T1).

13. Alimentation à découpage selon la revendication 12,

   **caractérisée en ce qu'**

   un raccordement de tension continue du redresseur en pont (BR), un raccordement du premier commutateur réglable (T1) et un raccordement de l'enroulement secondaire (L4) du deuxième transformateur (TR2) sont liés à la masse du côté primaire tandis qu'un point de liaison commun à la quatrième capacité (C3) et à la quatrième diode (D3), un raccordement de l'enroulement primaire (L5) du deuxième transformateur (TR2) et un raccordement du premier ainsi que du deuxième enroulement secondaire (L2, L3) du premier transformateur (TR1) sont liés à la masse du côté secondaire.

14. Alimentation à découpage selon l'une des revendications 7 à 13,

   **caractérisée en ce que**

   le sens d'enroulement du premier enroulement secondaire (L2) du premier transformateur (TR1) est choisi de sorte qu'on obtient un convertisseur à oscillateur d'écoulement.

15. Alimentation à découpage selon l'une des revendications 9 à 14,

   **caractérisée en ce que**

   le sens d'enroulement du deuxième enroulement secondaire (L3) du premier transformateur (TR1) est choisi en sens opposé au sens d'enroulement du premier enroulement secondaire (L2) du premier transformateur (TR1) de sorte qu'on obtient un convertisseur à oscillateur bloqué.

16. Alimentation à découpage selon l'une des revendications précédentes,

   **caractérisée en ce qu'**

   entre les deux condensateurs Y (C2, C4), on a un circuit en parallèle composé d'une quatrième capacité (C3) et d'une quatrième diode (D3) dont un raccordement est lié à la masse du côté secondaire tandis que son autre raccordement est relié au moyen d'une deuxième diode (D2) au raccordement commun de la première diode (D1) et de la deuxième capacité (C1), on a en parallèle à la deuxième capacité (C1) un premier diviseur de tension composé d'une deuxième et d'une troisième résistance (R1, R2), le point de liaison commun du premier enroulement secondaire (L2) du premier transformateur (TR1) et de la deuxième capacité (C1) ainsi que le point de liaison commun du deuxième enroulement secondaire (L3) du premier transformateur (TR1) et de la troisième capacité (C6) sont liés à la masse du côté secondaire, le point de liaison commun de la première diode (D1) et de la deuxième capacité (C1) sont reliés au moyen d'un montage en série composé du circuit émetteur-collecteur d'un deuxième transistor (T3) et d'une cinquième et sixième diode (D5, D6) à l'une des entrées de tension d'alimentation du générateur d'impulsions (PS) dont l'autre entrée de tension d'alimentation se trouve sur la masse du côté secondaire, la base du deuxième transistor (T3) est liée à la masse du côté secondaire au moyen d'un montage en série composé d'une quatrième résistance (R3) et du trajet collecteur-émetteur d'un troisième transistor (T2), la base du troisième transistor (T2) est reliée à la prise médiane du premier diviseur de tension composé de la deuxième et de la troisième résistance (R1, R2) et est relié au collecteur du deuxième transistor (T3) au moyen d'une cinquième résistance (R4), l'une des entrées de tension d'alimentation du générateur d'impulsions (PS) à laquelle est raccordée la sixième iode (D6) est liée à la masse du côté secondaire au moyen d'un montage en série composé du trajet émetteur-base d'un quatrième transistor (T5), d'une sixième résistance (R8) et du trajet collecteur-émetteur d'un cinquième transistor (T4), on a en parallèle à la troisième capacité (C6) un deuxième diviseur de tension composé d'une septième et d'une huitième résistance (R5, R6) dont la prise médiane est reliée à la base du cinquième transistor (T4), l'émetteur du quatrième transistor (T5) est relié à l'une des entrées de tension d'alimentation de l'unité de commande (μP) dont l'autre entrée de tension d'alimentation est liée à la masse du côté secondaire, la sortie de commande de l'unité de commande (μP) est reliée à l'entrée de commande du générateur d'impulsions (PS) dont la sortie d'impulsion est liée à la masse du côté secondaire au moyen du montage en série composé d'un circuit RC comportant la première résistance (R7) et la cinquième capacité (C7) et de l'enroulement primaire (L5) du deuxième transformateur (TR2) et l'un des raccordements de l'enroulement secondaire (L4) du deuxième transformateur (TR2) est lié à la masse du côté primaire tandis que l'autre raccordement de l'enroulement secondaire (L4) du deuxième transformateur (TR2) est relié à l'électrode de grille d'un transistor (T1) prévu en tant que premier commutateur réglable.

17. Alimentation à découpage selon la revendication 16,

   **caractérisée en ce que**

   le collecteur du quatrième transistor (T5) est relié à l'entrée de tension d'alimentation d'un amplificateur à infrarouge (IR) dont l'autre entrée de tension d'alimentation est liée à la masse du côté secondaire et que la sortie de l'amplificateur à infrarouge (IR) est reliée à l'unité de commande (μP).

**18.** Alimentation à découpage selon la revendication 17,

     **caractérisée en ce qu'**

     un stabilisateur de tension (S) se trouve entre le collecteur du quatrième transistor (T5) d'une part et l'unité de commande ($\mu$P) et l'amplificateur à infrarouge (IR) d'autre part.

**19.** Alimentation à découpage selon l'une des revendications précédentes,

     **caractérisée en ce que**

     pour l'unité de commande on prévoit un microprocesseur ($\mu$P).

**20.** Alimentation à découpage selon l'une des revendications précédentes,

     **caractérisée en ce que**

     le circuit de mise en marche composé de la deuxième à la sixième diode (D2, D3, D4, D5, D6), de la deuxième à la huitième résistance (R1, R2, R3, R4, R8, R5, R6), ainsi que du troisième, du quatrième et du cinquième transistor (T2, T5, T4) est conçu en tant que circuit intégré.

**21.** Alimentation à découpage selon la revendication 7,

     **caractérisée en ce que**

     le générateur d'impulsions (PS2) présente une première entrée (E1) pour l'alimentation en tension laquelle est raccordée au noeud commun de la première diode (D1) et de la deuxième capacité (C1).

**22.** Alimentation à découpage selon la revendication 21,

     **caractérisée en ce que**

     le générateur d'impulsions (PS2) présente une deuxième entrée (E2) qui sert à détecter la tension et qui est raccordée au noeud commun de la première diode (D1) et de la deuxième capacité (C1).

**23.** Alimentation à découpage selon la revendication 21 ou 22,

     **caractérisée en ce que**

     en fonction du signal appliqué à la deuxième entrée (E2), le générateur d'impulsions (PS2) prend un premier état où aucune impulsion d'excitation n'est fournie à sa sortie, ou un deuxième état ou des impulsions d'excitation sont disponibles à sa sortie.

FIG 1

EP 1 254 504 B1

FIG 2

FIG 3

EP 1 254 504 B1